# EUROPEAN PATENT APPLICATION

(11) **EP 2 533 186 A1**
(43) Date of publication of application: **12.12.2012**
(21) Application number: 11009496.8
(22) Date of filing: 01.12.2011
(51) Int. Cl.: G06Q 30/02, G06Q 20/38

(54) **A transaction reward system**

(30) Priority: 10.06.2011 SG 201104248
(71) Applicant: OneEmpower Pte Ltd., Singapore 486154 (SG)
(72) Inventor: Fung, Ho Chung Nicholas, Singapore 467298 (SG); Sang, Chu Yong, Singapore 510541 (SG)
(74) Representative: Pluckrose, Anthony William

(57) **Abstract**

The present disclosure provides a transaction reward system comprising a reward and transaction processor system. The transaction reward system further comprises a reward interface for receiving reward redemption information from a purchaser and communicating the reward redemption information to the reward and transaction processor system. In addition, the transaction reward system comprises a transaction interface for receiving information concerning a purchase from a retail processor associated with a retailer. The transaction reward system is arranged such that the purchaser can select at least a portion of an available reward for a purchase and the reward and transaction processor system is arranged to offset the selected reward against a cost of the purchase in accordance with the reward redemption information.

## Description

### Field of the Invention

The present invention broadly relates to a transaction reward system.

### Background of the Invention

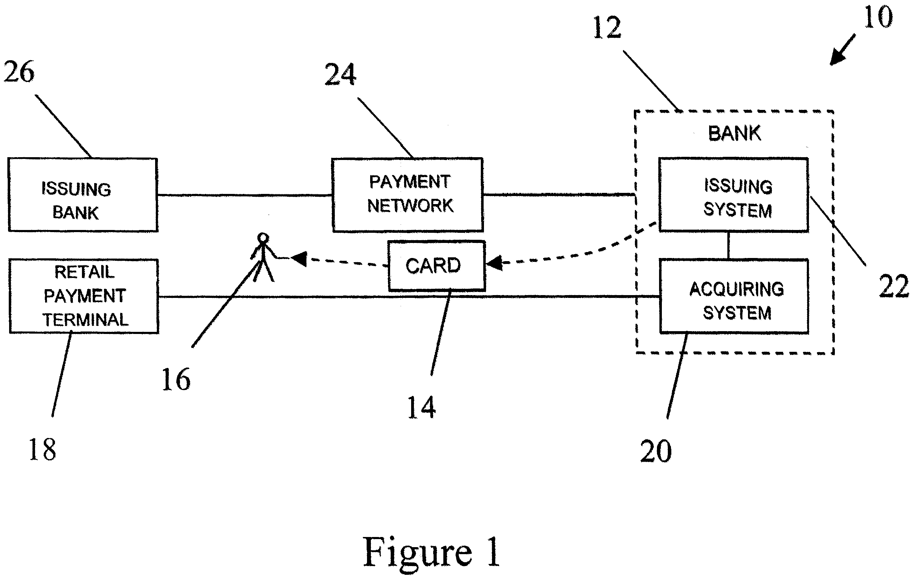

Figure 1 illustrates a conventional system 10 for processing payment card transactions. A bank 12 can issue a payment card 14, such as a credit card, debit card or prepaid card, to a customer 16. The customer can then use the payment card 14 to make a payment at a point of purchase, such as at a retail payment terminal 18 of a retailer. In this example, the bank 12 is acting as an issuing bank.

For the retailer to accept the payment card 14, the retailer must have a payment service arrangement with a bank. In this example, the retailer has a payment service arrangement with the bank 12. The bank 12 provides the retailer with the retail payment terminal 18, and the retail payment terminal 18 is able to connect to an acquiring system 20 of the bank 12. In this example, the bank 12 is acting as an acquiring bank.

If the issuing bank and the acquiring bank are the same bank, which is the case in the above example, then a payment transaction request from the retail payment terminal 18 (referred to as an "on-us terminal") is sent to the acquiring system 20 of the bank 12 and the bank 12 then routes the transaction to an issuing system 22 for approval.

If the payment card 14 was not issued by bank 12, which acts as the acquiring bank, and was instead issued by a further bank 26, which acts as the issuing bank, then the acquiring bank 12 routes the transaction to a payment network 24, for example a payment network such as Visa International or MasterCard International. The payment network 24 locates the issuing bank 26 and then routes the payment transaction to an issuing system of the issuing bank 26 for authorisation. In such cases where the issuing bank is not the acquiring bank, the retail payment terminal 18 from which the payment transaction request comes from is referred to as an "off-us terminal" or a "not-on-us terminal".

Most customers have payment cards from more than one issuing bank. As such, the issuing banks are under pressure to make their payment cards a more attractive choice for use in payment transactions compared with a payment card from another issuing bank. One of the means by which issuing banks can make their payment cards more attractive is to provide benefits to customers when they use that issuing bank's payment card for payment - for example by giving instant discounts and rebates in the form of loyalty reward points during, and as part of, the payment transactions. For example, the issuing bank could reward customers with cash rebate points which can be redeemed at the time of payment to offset the purchase amount.

For example, a customer who has earned $5 in cash rebate points and is making a purchase of $100 could redeem the $5 worth of cash rebate points and end up paying only $95, earning $4.75 (for example) in cash rebate points on the net purchase amount of $95. All of these actions are done as one single integrated payment transaction at the retail payment terminal 18.

Loyalty marketing systems in which customers enjoy such instant rewards in the form of points, cash rebates, cash vouchers/coupons, gift vouchers/coupons and discount vouchers/coupons, lucky dips, instant discounts, etc as part of the payment transaction at a point of sale (also referred to as instant rewards systems) typically require the retail payment terminal 18 used for the transaction to be adapted to allow it to cater for the loyalty marketing system. For example, the software in the retail payment terminal 18 must be modified to cater for the loyalty marketing system. Such a modification of the retail payment terminal software is expensive.

Further, such a modification is particularly challenging for an issuing bank who wishes to implement instant rewards for its customers at a retail payment terminal that is not provided by the issuing bank. In such a case, the retail payment terminal belongs to either the retailer or a third party acquiring bank and therefore the issuing bank is unable to modify the retail payment terminal software of such terminals. Consequently, this limits the issuing bank to providing instant rewards benefits to its customers only at retailers where the issuing bank is also the acquiring bank.

As such, there is a need for technological advancement.

### Summary of the Invention

The present invention provides in a first aspect a
transaction reward system comprising:
a reward and transaction processor system;
a reward interface for receiving reward redemption information from a purchaser and communicating the reward redemption information to the reward and transaction processor system; and
a transaction interface for receiving information concerning a purchase from a retail processor associated with a retailer;
wherein the transaction reward system is arranged such that the purchaser can select at least a portion of an available reward for a purchase and the reward and transaction processor system is arranged to offset the selected reward against a cost of the purchase in accordance with the reward redemption information.

Throughout this specification the term "retail" is used for sale or otherwise offering of any type of goods or commodities or services via any physical store or virtual store, the term "retailer" is used for any type of organisation, person or legal entity that offers any type of goods or commodities or services for sale or otherwise via any physical store or virtual store, the term "retail payment terminal" or "retail processor" is used for any type of physical payment terminal, virtual payment terminal or e-commerce payment gateway that processes payment transactions and the term "payment card" is used for any type of physical or virtual payment card such as a credit card, debit card or prepaid card.

In one embodiment the transaction reward system is arranged such that at least a portion of an available reward can be offset against the purchase without interaction by the retailer or influencing operation of the retail processor. Alternatively, the transaction reward system may be arranged such that a portion of the transaction reward system is arranged such that the retailer is enabled to contribute to the reward. For example, the reward and transaction processor system may be arranged to receive information that identifies a retailer or type thereof and the reward and transaction processor system may then be arranged to identify campaigns, or rules or the like that are associated with a retailer.

It will be appreciated by a person skilled in the art that the reward may be of any suitable type and examples include reward points, cash vouchers or coupons, gift vouchers or coupons, discount vouchers or coupons, lucky dips and instant discounts.

In one embodiment the reward and transaction processor system comprises a reward processor that is associated with a reward provider and a transaction processor that is associated with a financial organisation, such as an issuing bank or a credit organisation, that is enabled to approve a purchase directly.

In another embodiment the reward and transaction processor system comprises a reward processor that is associated with a reward provider and a transaction processor that is associated with the financial organisation (such as the issuing bank or credit organisation) that is enabled to approve a purchase directly, the transaction processor being arranged to transact with an organisation (such as an acquiring bank), for example via a payment network or similar.

In a further embodiment the reward and transaction processor system comprises a reward processor and a transaction processor that are both associated with a financial organisation (such as the issuing bank or credit organisation) that is enabled to approve a purchase directly.

The transaction reward system may be arranged such that the purchaser can select a portion of an available reward for redemption against a purchase prior to the purchase. Further or alternatively, the transaction reward system may be arranged such that the purchaser can select a portion of an available reward for redemption against a purchase after the purchase took place. For example, at least a portion of the available reward may be a reward that is associated with the purchase.

In one example the transaction reward system may be arranged such that a selected reward may be offset against the cost of the purchase such that the cost is reduced to zero.

In one example the reward interface is arranged to receive information form a purchaser that is remotely located. For example, the reward interface may be arranged to receive the information from the purchaser via a telephone network, such as a mobile phone network, or the Internet.

The reward and transaction processor system may be arranged to calculate instant rewards earned by the purchaser through a transaction that has just occurred.

The reward and transaction processor system may also be arranged to provide the purchaser with information, for example via a telephone network, such as a mobile phone network, or the Internet. In this example the transaction reward system may be arranged such that the purchaser can be provided with information concerning the reward, such as a reward amount or availability. The transaction reward system may also be arranged so as to communicate information to the purchaser in respect of a transaction that has just occurred, the information comprising any one of the group comprising: a gross purchase amount, a redemption amount, a nett purchase amount, information in respect of rewards earned, a rewards balance and targeted marketing messages.

In one specific embodiment the transaction reward system is arranged such that the purchaser can provide instructions to the reward processor and the transaction processor such that, when the purchase takes place, the transaction processor offsets the reward in an instructed manner against the purchase amount.

The present invention provides in a second aspect a method of performing a transaction, the method comprising the steps of:
receiving reward redemption information concerning a selection of at least a portion of an available reward from a purchaser, the reward redemption information being received by a reward and transaction processor system;
receiving information concerning a purchase from a retail processor associated with a retailer, the information being received by the reward and transaction processor system; and
offsetting the selected reward against a cost of the purchase in accordance with the received reward redemption information, the selected reward being offset by the reward and transaction processor system.

In one embodiment the method is conducted such that at least a portion of an available reward can be offset against the purchase without interaction by the retailer or influencing operation of the retail processor.

Alternatively, the method may comprise a further step such that the retailer is enabled to contribute to the reward. For example, the method may comprise a step of identifying the retailer or type thereof, and identifying campaigns, rules or the like that are associated with the retailer.

The step of receiving the reward redemption information may occur prior to the step of receiving the information concerning a purchase from a retail processor associated with a retailer. For example, the purchaser may preselect the at least a portion of an available reward to be offset against a subsequent purchase. As such, the method may comprise a step of storing the reward redemption information for future use.

Alternatively, the steps of receiving the reward redemption information and receiving the information concerning a purchase from a retail processor may occur at substantially the same time, or the step of receiving the reward redemption information may occur after the step of receiving the information concerning a purchase.

In one example the reward redemption information is received remotely from the purchaser, such as via a telephone network, such as a mobile phone network, or the Internet.

The method may further comprise the step of communicating information to the purchaser, for example via a telephone network, such as a mobile phone network, or the Internet. In this example the purchaser can be provided with information concerning the reward, such as a reward amount or availability.

In one specific embodiment, the method further comprises the step of receiving instructions from the purchaser such that, when the purchase takes place, the reward and transaction processor system offsets the reward in an instructed manner against the purchase amount.

The present invention provides in a third aspect a computer program for instructing a computer system and arranged so that, when loaded in the computer, the computer system operates as a transaction reward system in accordance with the first aspect of the present invention.

The present invention provides in a fourth aspect a computer readable medium having a computer readable program code embodied therein for causing a computer system to operate as a transaction reward system in accordance with the first aspect of the present invention.

The present invention provides in a fifth aspect a computer system that is arranged for operation in accordance with the transaction reward system as defined by the first aspect of the present invention.

The present invention provides in a sixth aspect a data signal having a computer readable program code embodied therein and that is arranged for causing a computer to operate in accordance with the transaction reward system of the first aspect of the present invention.

The invention will be more fully understood from the following description of specific embodiments of the invention. The description is provided with reference to the accompanying drawings.

### Brief Description of the Drawings

Figure 1 is a schematic diagram of a conventional system for processing payment card transactions;
Figure 2 is a schematic diagram of a transaction reward system in accordance with an embodiment of the present invention; and
Figure 3 is a schematic diagram of a method of performing a transaction in accordance with an embodiment of the present invention.

### Detailed Description of Specific Embodiments

In general, the present invention provides a transaction reward system wherein a purchaser, who has been issued a payment card from a financial institution, is able to communicate with the financial institution to indicate that at least a portion of an available reward is to be applied to a cost of a purchase from a retailer. In this way, the retailer does not require an association with the financial institution for the reward to be applied, nor does the retailer require a retail payment terminal that is adapted to apply the available reward to the cost of the purchase. Instead, the reward is applied at the financial institution's end and, therefore, no affiliations or modified retail payment terminals are required at the retailer's end.

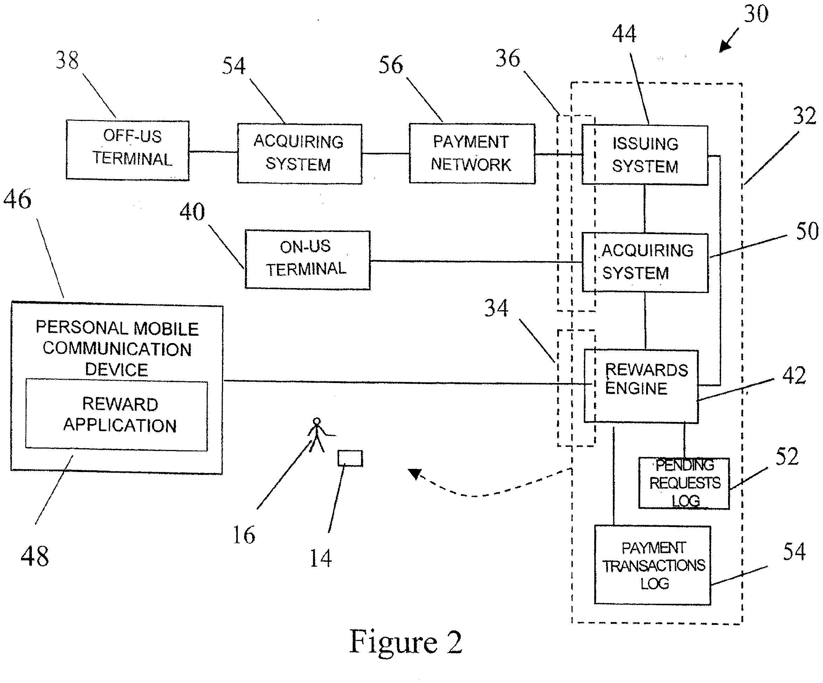

Figure 2 shows a schematic representation of a transaction reward system 30 in accordance with an embodiment of the present invention. The transaction reward system 30 comprises a reward and transaction processor system 32, a reward interface 34 and a transaction interface 36. The reward interface 34 is arranged to receive reward redemption information from the purchaser 16, and to communicate the reward redemption information to the reward and transaction processor system 32. The transaction interface 36 is arranged to receive information concerning a purchase from a retail processor, such as off-us terminal 38 or on-us terminal 40, associated with a retailer.

The transaction reward system 30 is arranged such that the purchaser can select at least a portion of an available reward for a purchase and the reward and transaction processor system 32 is arranged to offset the selected reward against a cost of the purchase in accordance with the reward redemption information.

In this example, the transaction reward system 30 is provided by a bank, referred to hereinafter as the issuing bank, who has issued a payment card 14 to the purchaser 16.

In one embodiment the transaction reward system 30 is arranged such that at least a portion of an available reward can be offset against the purchase without interaction by the retailer or influencing operation of the retail processor 38, 40. Alternatively, the transaction reward system 30 may be arranged such that a portion of the transaction reward system 30 is arranged such that the retailer is enabled to contribute to the reward. For example, the reward and transaction processor system 32 may be arranged to receive information, such as via the transaction interface 36, that identifies a retailer or type thereof and the reward and transaction processor system 32 may then be arranged to identify campaigns, or rules or the like that are associated with a retailer.

It will be appreciated by a person skilled in the art that the reward may be of any suitable type and examples include reward points, cash vouchers or coupons, gift vouchers or coupons, discount vouchers or coupons, lucky dips and instant discounts.

In this example the reward and transaction processor system 32 comprises a reward processor, in this example a rewards engine 42, and a transaction processor, in this example an issuing system 44. The rewards engine 42 is in communication with the issuing system 44, the issuing system 44 being authorised to approve a purchase directly.

The purchaser 16 uses a personal mobile communication device 46, such as a smart phone, to send reward redemption information to the reward interface 34. In one example, the personal mobile communication device 46 is installed with a reward application 48 that provides an interface for the purchaser 16 to select when and how to redeem a reward. The reward application 48 also provides the purchaser with information regarding rewards that are available to the purchaser 16, such as reward entitlements that can be redeemed when making a purchase. The reward application 48 also provides the purchaser with electronic transaction information with reward details including gross purchase amount, redemption amount, nett purchase amount, rewards earned for the purchase that has just occurred, new reward balances and targeted marketing messages.

An example will now be described wherein the purchaser 16 makes a purchase at the on-us terminal 40, and uses the personal mobile communication device 46 to communicate reward redemption information to the reward and transaction processor system 32.

The on-us terminal 40 is in communication with an acquiring system 50 associated with the issuing bank.

Prior to making a payment transaction at the on-us terminal 40, the purchaser 16 can use the reward application 48 to communicate with the rewards engine 42 to check on the reward entitlements available to the purchaser 16. The rewards could be in the form of cash rebate, points, discount coupons/vouchers, cash coupons/vouchers, etc. The purchaser 16 then selects, via the application 48, the entitlements to be redeemed on the next payment transaction that purchaser 16 intends to make. The selection is logged by the rewards engine 42 and stored in a memory associated with the engine 42 as a pending requests log 52.

Selecting an entitlement to be redeemed prior to purchase provides the advantage of allowing the purchaser 16 to make redemption decisions via the application 48, which may entail selecting from a number of benefit options, such as cash-back points, discount coupons etc, offered by the retailer where the on-us terminal 40 is located or by the issuing bank, before the payment transaction is initiated at the on-us terminal 40, thereby avoiding slowing down the payment process and reducing queuing at the check-out point.

The purchaser 16 then proceeds to the check-out counter to make the payment with the payment card 14 at the on-us terminal 40, which is sent to the acquiring system 50 of the issuing bank.

When the issuing bank receives a payment authorisation request, for example a payment authorisation request for $100, besides processing as usual, it also pushes the request to the rewards engine 42, which looks up the pending requests log 52 for a pending request matching the payment card 14 used in that payment transaction. If there is a match, the rewards engine 42 sends a credit back transaction to the issuing system 44 to credit back to purchaser 16 the redemption value (for example $15 in cash back points and / or discount coupons), thus offsetting either in full or in part the payment amount just made.

If there is no match, the payment transaction is logged by the rewards engine 42 and stored in a memory associated with the engine 42 as a payment transactions log 54. The reward application 48 will provide the option to the purchaser to indicate whether the reward entitlements selected are for redemption against a purchase transaction to be made or a purchase transaction which has already taken place. For redemption against the next payment transaction that purchaser 16 intends to make, the selection is logged by the rewards engine 42 and stored in a memory associated with the engine 42 as a pending requests log 52. For redemption against a purchase after the purchase took place, upon receipt of such selection, the rewards engine 42 looks up the payment transactions log 54 for a payment transaction matching the payment card 14 used in that redemption selection. If there is a match, the rewards engine 42 sends a credit back transaction to the issuing system 44 to credit back to purchaser 16 the redemption value, thus offsetting either in full or in part the payment amount made.

In this example the offset is in part, with a balance of $85 to be charged to the payment card 14, and at the same time the rewards engine 42 calculates any instant rewards that the purchaser 16 may be entitled to or has earned through the payment transaction that has just occurred (for example $4.25 in cash back points and one 10% discount coupon).

The rewards engine 42 is also arranged to push out to the application 48, either instantly or on a delayed basis, information regarding the redemption and any new rewards earned by using the payment card 14. In the preceding example, information displayed to the purchaser 16 on the personal mobile communication device 46 would then reflect the total purchase amount authorised, i.e. $100, the redemption value of $15, the nett amount payable by the purchaser 16 - which in this case amounts to ($100 - $15), i.e. $85, the rewards earned for the transaction that has just occurred ($4.25 in cash back points and one 10% discount coupon in this case) and the new rewards balances available.

The funding of the redemption value ($15 in this case) and any reward value to be provided to the purchaser 16 for the payment transaction that has just occurred is a commercial arrangement between the retailer where the on-us terminal 40 is located and the issuing bank, where both parties may agree to contribute to the redemption value and/or reward value in a predefined ratio or just one of the parties will contribute to the redemption value and/or reward value. The issuing bank may provide such instant redemption and/or reward to the purchaser 16 at the on-us terminal 40 without the involvement or knowledge of the retailer where the on-us terminal 40 is located, in which case, the retailer will not contribute to the funding of the redemption value and/or reward value.

For the case where the purchaser 16 makes a purchase at the off-us terminal 38, which is in communication with the issuing system 44 via an acquiring system 54 of another bank and a payment network 56 provided by a third party, the purchaser 16 can perform the same steps as before, namely preselecting to redeem a reward prior to the purchase, and then make the purchase at the off-us terminal 38.

The payment request from the off-us terminal 38 is routed through the acquiring system 54 to the payment network 56 and then through to the issuing system 44 of the issuing bank for authorisation. Upon authorisation, the issuing system 44 pushes the payment authorisation transaction details to the rewards engine 42, which then looks up the pending requests log 52 for a request matching the current payment transaction, and sends a credit back transaction to the issuing system 44 to credit back to purchaser 16 the redemption value (for example $15 in cash back points and / or discount coupons) if the pending requests log 52 contains a relevant entry.

The rewards engine 42 is also arranged to push out to the application 48, either instantly or on a delayed basis, information regarding the redemption and any new rewards earned by using the payment card 14, as described in the previous example and to calculate any instant rewards that purchaser 16 may be entitled to or has earned through the payment transaction that has just occurred.

The funding of the redemption value and any reward value to be provided to the purchaser 16 is a commercial arrangement between the retailer where the off-us terminal 38 is located and the issuing bank, where both parties may agree to contribute to the redemption value and/or reward value in a certain ratio or just one of the parties will contribute to the redemption value and/or reward value. The issuing bank may provide such instant redemption and/or reward to the purchaser 16 at the off-us terminal 38 without the knowledge of the retailer, in which case, the retailer will not contribute to the funding of the redemption value and/or reward value of the payment transaction initiated by the purchaser 16.

For the above examples, the payment amount authorised ($100), the redemption value credited back to the purchaser 16 ($15), the nett amount payable by the purchaser 16 ($85), the rewards earned by the purchaser for the transaction that has just occurred ($4.25 in cash back points and one 10% discount coupon) and the new rewards balances available can be reflected in a customer statement sent to the purchaser 16 periodically (e.g. monthly) and may also be displayed as an electronic receipt on the personal mobile communication device 46 instantly during the payment transaction, together with targeted marketing messages selected by the rewards engine 42 to match a profile associated with the purchaser 16. The targeted marketing messages can be in the form of advertisements, coupons or other form of offers which can be redeemed in subsequent transactions to offset purchase amounts.

The purchaser 16 can use the application 48 installed on the personal mobile communication device 46 to capture identification information of the retailer at the off-us or on-us terminals 38, 40. The retailer identification information can be in the form of a barcode, a quick response (QR) code (a two-dimensional code) or a radio frequency identification (RFID) tag displayed at the retailer. The retailer identification information can be captured by a camera of the personal mobile communication device 46 if it is in form of a barcode or QR code. If the retailer identification information is in the form of a RFID tag, it can be scanned using a near field communication (NFC) function of the personal mobile communication device 46.

The captured retailer identification information is then communicated by the personal mobile communication device 46 to the rewards engine 42. The reward engine 42 maintains a database of retailer identification information with corresponding redemption and reward rules and campaigns applicable to each retailer.

The captured retailer identification information enables the rewards engine 42 to identify the corresponding retailer and determine any instant rewards that purchaser 16 may be entitled to redeem or earn through the payment transaction done at the retailer.

This allows the issuing bank to interactively inform the purchaser 16 of rewards and benefits whenever the purchaser 16 transacts with the payment card 14 and enables the purchaser 16 to benefit from rewards offered by retailers and/or the issuing bank, regardless of whether the terminal is an on-us terminal 40 or an off-us terminal 38, and whether the terminal 38, 40 is local or overseas, without modifying software of the terminal 38, 40 and without changing the existing payment process at the terminal 38, 40, and it provides opportunities for issuing banks and/or retailers to make targeted and relevant offers to a purchaser 16 at or near the time of purchase.

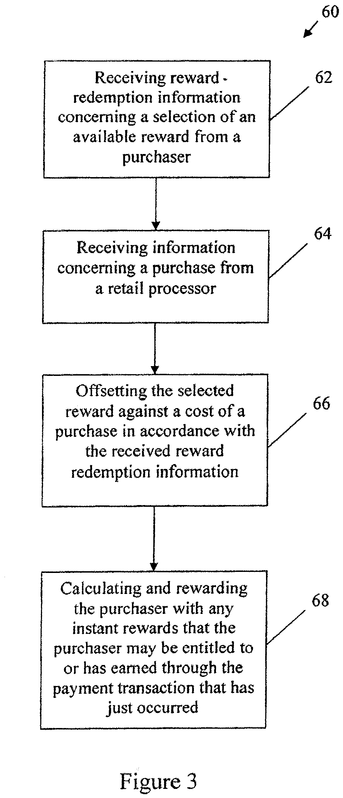

Figure 3 is a schematic diagram of a method 60 of performing a transaction. The method comprises a first step 62 of receiving reward redemption information concerning a selection of an available reward from the purchaser 16, the reward redemption information being received by the reward and transaction processor system 32 of Figure 2.

The method 60 comprises a second step 64 of receiving information concerning a purchase from a retail processor, such as retail terminals 38, 40, associated with a retailer, the information being received by the reward and transaction processor system 32.

The method 60 comprises a third step 66 of offsetting the selected reward against a cost of the purchase in accordance with the received reward redemption information, the selected reward being offset by the reward and transaction processor system 32.

The method 60 comprises a fourth step 68 of calculating and rewarding the purchaser 16 with any instant rewards that the purchaser 16 may be entitled to or has earned through the payment transaction that has just occurred, the instant reward being calculated by the reward and transaction processor system 32.

In one embodiment, the method 60 is conducted such that at least a portion of an available reward is offset against the purchase without interaction by the retailer or influencing operation of the retail terminal 38, 40.

Alternatively, the method 60 may comprise a further step such that the retailer is enabled to contribute to the reward. For example, the method may comprise a step wherein the retailer or type thereof is identified, and wherein campaigns, or rules or the like that are associated with the retailer are identified.

The first step 62 of receiving the reward redemption information may occur prior to the second step 64 of receiving the information concerning a purchase from a retail processor associated with a retailer. For example, the purchaser 16 may preselect the at least a portion of an available reward to be offset against the next purchase. As such, the method 60 may comprise a step of storing the reward redemption information for future use.

Alternatively, the steps 62, 64 of receiving the reward redemption information and receiving the information concerning a purchase from a retail processor may occur at substantially the same time, or the first step 62 of receiving the reward redemption information may occur after the second step 64 of receiving the information concerning a purchase. It will be appreciated that, in cases wherein the first step 62 occurs after the second step 64, the fourth step 68 may occur before the first and third steps 62, 66. In one example the selected reward may be selected such that the offset against the cost of the purchase reduces to cost by a portion of the cost or reduces the cost to zero.

In one example the reward redemption information is received remotely from the purchaser 16, such as via a telephone network, such as a mobile phone network, or the Internet.

The method 60 can further comprise the step of communicating information to the purchaser 16, for example via a telephone network, such as a mobile phone network, or the Internet. In this example the purchaser 16 can be provided with information concerning the reward, such as a reward amount or availability.

In one specific embodiment, the method 60 further comprises the step of receiving instructions from the purchaser 16 such that, when the purchase takes place, the reward and transaction processor system offsets the reward in an instructed manner against the purchase amount.

It will be appreciated that the transaction reward system 30 could be implemented as a computer program for instructing a computer system and arranged so that, when loaded in the computer, the computer system operates in accordance with the transaction reward system 30 described above.

Further, it will be appreciated that the transaction reward system 30 could be embodied as a computer readable medium having a computer readable program code embodied therein for causing a computer system to operate in accordance with the transaction reward system 30 described above.

It will also be appreciated that the transaction reward system 30 could be implemented as a computer system that is arranged for operation in accordance with the transaction reward system 30 described above.

The transaction reward system 30 could be embodied as a data signal having a computer readable program code embodied therein and that is arranged for causing a computer to operate in accordance with the transaction reward system 30 described above.

Having described preferred embodiments of the invention with reference to the accompanying drawings, it is to be understood that the invention is not limited to those precise embodiments and that various changes and modifications could be effected therein by one skilled in the art without departing from the spirit or scope of the invention as defined in the appended claims.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

## Claims

1. A financial transaction system, comprising:
a financial computer system for storing users' balance data, located at a first location;
a plurality of retail terminals having input means, each remote from the first location;
a plurality of mobile terminals to be carried by the users of the system;
a first communications network via which the retail terminals can communicate transaction data relating to transactions to the financial computer system; and
a second wireless communications network via which the mobile terminals can communicate reward identification data corresponding to selected transactions to the banking computer system,
wherein:
the financial computer system is arranged to receive transaction data via the first communications network, and to receive reward identification data via the second communications network;
the financial computer system is arranged to match the transaction data with the reward identification data to identify any transactions corresponding with reward identification data;
for each transaction made by a user, the financial computer system updates the user's balance data using the transaction data; and
for each transaction made by a user, if reward identification data corresponding with the transaction is communicated to the financial computer system, the financial computer system updates the user's balance data using both the transaction data and the corresponding reward identification data.

2. The financial transaction system of claim 1, wherein at least one of the retail terminals comprises a token reader.

3. The financial transaction system of claim 2, wherein the token reader is a card reader.

4. The financial transaction system of any preceding claim, wherein:
the financial computer system is arranged to search the transaction data using the reward identification data to identify any transactions corresponding with received reward identification data; and
the financial computer system is arranged to search the reward identification data using the transaction data to identify any rewards corresponding with received transactions data.

5. The financial transaction system of any preceding claim, wherein the plurality of mobile terminals are a plurality of cellular phones, tablet computers, or personal digital assistants.

6. The financial transaction system of any preceding claim, wherein the financial computer system is arranged to transmit reporting data via the second wireless communications network to a mobile terminal after transaction data has been matched with reward identification data received from that mobile terminal.

7. A method of communicating reward and financial data, comprising the steps of:
storing users' balance data on a financial computer system located at afirst location;
transmitting transaction data via a first communications network via from a plurality of retail terminals, each located remotely from the first location, to the financial computer system; and
transmitting reward identification data via a second wireless communications network from a plurality of mobile terminals, carried by the users, to the financial computer system,
wherein:
receiving transaction data with the financial computer system via the first communications network;
receiving reward identification data with the financial computer system via the second communications network;
matching the received transaction data with the received reward identification data using the financial computer system to identify any transactions corresponding with reward identification data; and
updating the user's balance data using both the transaction data and the corresponding reward identification data.

8. The method of claim 7, further comprising the step of providing a token to at least one of the retail terminals to identify a user.

9. The method of claim 8, wherein the token reader is a card reader.

10. The method of any one of claims 7 to 9, further comprising the step of:
using the financial computer system to search the transaction data using the reward identification data to identify any transactions corresponding with received reward identification data; and
using the financial computer system to search the reward identification data using the transaction data to identify any rewards corresponding with received transactions data.

11. The method of any one of claims 7 to 10, wherein the plurality of mobile terminals are a plurality of cellular phones, tablet computers, or personal digital assistants.

12. The method of any one of the claims 8 to 13, further comprising the step of transmitting reporting data via the second wireless communications network to a mobile terminal after received transaction data has been matched with reward identification data received from that mobile terminal.
